# EUROPEAN PATENT APPLICATION

(11) **EP 3 369 767 A1**
(43) Date of publication of application: **05.09.2018**
(21) Application number: 17425024.1
(22) Date of filing: 03.03.2017
(51) Int. Cl.: C08J 5/18, C08J 7/04, B32B 27/08, B32B 27/32

(54) **BOPP FILM WITH BARRIER LACQUER AGAINST MINERAL OILS**

(71) Applicant: VIBAC S.p.A., 15040 Ticineto (Alessandria) (IT)
(72) Inventor: LEPORI, Alessandro, I-50053 Empoli (Firenze) (IT); NERVEGNA, Valentino, I-67100 L'Aquila (IT); MAGNO, Carmela, I-67010 Bazzano (L'Aquila) (IT); PARISSE, Luigi, I-67100 L'Aquila (IT); MAZZAFERRO, Stefano, I-67100 L'Aquila (IT)
(74) Representative: Gerbino, Angelo

(57) **Abstract**

A lacquer is applied on a biaxially oriented polypropylene (BOPP) film, in order to decrease considerably the transmission rate of mineral oils. The lacquer is applied in the form of an aqueous dispersion on an intermediate primer layer and is composed of at least one resin acting as a binder and an amino acid.

## Description

The present invention relates to materials suitable for the packaging of foods.

Materials intended for use in contact with food must not transfer to the latter any component that may alter the composition, cause deterioration in the organoleptic properties or put the health of the consumer in danger.

These requirements, contained in Directive 10/2011/EC and subsequent amendments/additions/revisions, concern all materials that come into contact with food.

On the other hand, for ecological purposes, packaging materials in paper and cardboard are largely produced with recycled paper. Moreover, recycled paper and cardboard can vary their composition, and can include paper containing printing inks, adhesives, waxes, bleaching additives, etc.

There is thus a real risk that foreign substances present in these recycled paper materials used to package dry solid foods can migrate by contact with the latter.

Several studies comprehensively demonstrate the potential contaminants in recycled paper and cardboard. Moreover, some recent Swiss studies have shown that cardboard boxes, made from recycled material, contain significant amounts of mineral oil hydrocarbons (MOH), a material occurring in printing inks for newspapers/magazines. If the food product is packaged in such cardboard boxes, it is possible for mineral oil to migrate from the cardboard to the food product.

The concentration of the contaminant may thus easily exceed the maximum acceptable daily intake (ADI) indicated by the Joint FAO/WHO Expert Committee on Food Additives (JECFA).

The European Food Safety Authority (EFSA) has published a scientific opinion on human exposure to mineral oils in food. The potential impact of MOHs on human health is very diverse: so-called "aromatic" MOHs (MOAH) can act as genotoxic carcinogens (i.e., they can damage DNA, the genetic material of cells and cause cancer) while some "saturated" MOHs (MOSH) can accumulate in human tissue and cause liver damage.

The EFSA has issued a series of recommendations to eliminate/minimize contamination of foods by mineral oils.

Biaxially oriented polypropylene (BOPP) films, widely used in the packaging of foods due to the chemical nature of PP, do not represent a barrier to the migration of apolar substances such as those present in mineral oils.

By far the best from this point of view are films made of polyester (PET), a polymer which, however, has other inherent limitations, such as its high moisture sensitivity, the absence of heat-sealing properties and high density, which makes it more expensive than polypropylene.

In order to improve the barrier properties of BOPP, associating with films of the latter material an additional layer composed of ethylene vinyl alcohol (EVOH) has been considered. In this case, the permeation values of mineral oils are lowered considerably, but the multi-layer film is very expensive, both for the cost of raw materials and the complexity of the production process. Moreover, the presence of the EVOH layer makes multi-layer films very sensitive to moisture.

On the other hand, US 2003/01481119 A1 describes a biaxially oriented polypropylene film obtained by combining high crystallinity polypropylene (HCPP) and hydrocarbon resin. As much as the permeability to mineral oils may be reduced with respect to a standard BOPP film, it is still higher by several orders of magnitude than that of PET films or BOPP films with an associated EVOH layer.

An object of the present invention is therefore to remedy the aforementioned drawbacks of the prior art.

According to the invention, this object is achieved by a layered article comprising a BOPP film including at least one sub-layer of homopolymer PP, at least one outer layer of lacquer having barrier properties against mineral oils and an intermediate layer of primer interposed between the outer layer of lacquer and the film.

Such article, while being comparatively inexpensive and simple to produce, has surprisingly high barrier properties against mineral oils, so as to constitute a suitable material for packaging foods and preserving them from contamination. It should, in fact, be emphasized that good barrier properties against chemically diverse substances are not necessarily indicative of good barrier properties against mineral oils.

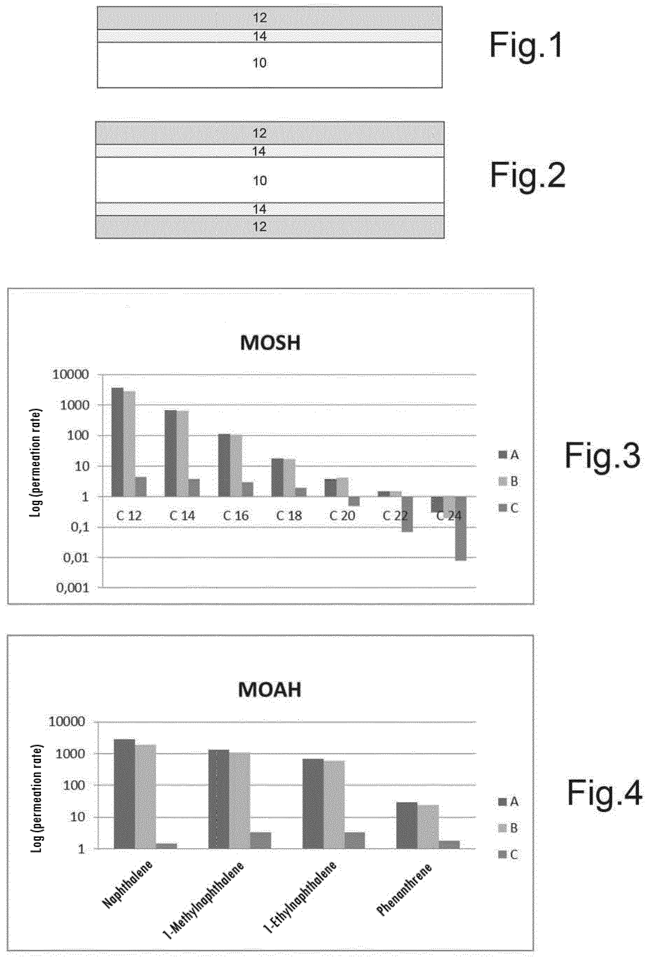

According to a first preferred embodiment, the article of the invention is composed (see fig. 1) of said film 10, an outer layer of lacquer 12 and an intermediate layer of primer 14.

According to further preferred embodiment, the article of the invention is composed (see fig. 2) of said film 10, two outer layers of lacquer 12 and a respective intermediate primer layer 14 interposed between each layer of lacquer 12 and the film 10.

Preferably, the BOPP film has a thickness from 15 to 60 µm and has been surface-treated with the flame or corona method, so as to have a surface energy > = 38 mN/m.

The film may be produced through sequential stretching ("stenter") systems or simultaneous stretching (double-bubble and LISIM® - Brueckner Maschinenbau GmbH & Co KG).

The BOPP film may be composed of one or more sub-layers. The outer sub-layers may be composed of homopolymer PP, copolymers C₃-C₄ e C₃-C₂-C₄ or their blends. The inner sub-layers are composed of homopolymer PP. Conventional additives in the field, such as white pigments (TiO₂), cavitating agents (CaCO₃), hydrocarbon and anti-blocking resins (synthetic silica, PMMA), may be included in the structure of the individual sub-layers.

Preferably, the primer is an aqueous dispersion based on polyethylenimine (PEI) or aliphatic polyurethane and is applied on the film with a "reverse gravure" system in a dry amount variable from 0.03 g/m² to 0.25 g/m².

Preferably, the lacquer is composed of an aqueous dispersion of a copolymer based on esters of acrylic and meta-acrylic acid and and/or styrene (Tg 50-70 °C; MFFT, 25-60 °C), at least one amino acid, carnauba wax in aqueous dispersion, and synthetic and/or colloidal silica as anti-blocking agents. The lacquer is applied on the intermediate primer layer with a "reverse gravure" system in a dry amount variable from 0.30 g/m² to 6 g/m².

Table I shows the preferred composition ranges of various ingredients of the lacquer.

**Table I**

| | **phr*** |
|---|---|
| Resin, in particular acrylic (binder) | 100 |
| amino acid | 5-80 |
| carnauba wax | 3-10 |
| synthetic silica | 0.1-0.5 |
| colloidal silica | 0-40 |

| | |
|---|---|
| **: dry parts per 100 parts of resin* | |

A non-limiting list of commercially available resins usable as polymeric binder includes: NeoCryl FL-711 (DSM), NeoCryl BT-36 (DSM), NeoCryl FL-791 XP (DSM), NeoCryl BT-67 (DSM), Joncryl HSL 700 (BASF), Loctite Liofol HS 4118 (Henkel).

A non-limiting list of usable amino acids that are commercially available includes: L-Arginine (Kyowa Hakko), L-Lysine, L-Lysine HCl (Kyowa Hakko), Glycine (Sigma-Aldrich), L-Citrulline (Kyowa Hakko).

A further object of the present invention is the use of a layered article of the type described above for packaging a food product and hindering the migration of mineral oils.

Further advantages and features of the present invention will become apparent from the following examples of implementation provided by way of non-limiting examples.

Three samples were prepared, two for comparison (A and B) and one according to the invention (C).

### Preparation of sample A

A multilayer BOPP film was produced of a thickness of 25 µm, on a sequential stretching system (longitudinal stretching ratio MDx 5, transversal stretching ratio TDx 9).

The BOPP film is composed of a plurality of sub-layers, in particular two outer sub-layers of Adsyl 5C39F of 1 µm thickness and one inner Moplen HP522H sub-layer of 23 µm thickness. Adsyl 5C39F* is a terpolymer C₂-C₃-C₄, Moplen HP522H is a homopolymer PP, and both of these materials are produced by LyondellBasell.

### Preparation of Sample B

A multilayer BOPP film of 25 µm thickness was produced on a sequential stretching system (longitudinal stretching ratio MDx 5, transversal stretching ratio TDx 9) in a manner similar to sample A. The only difference consists in the fact that the inner sub-layer is composed of Moplen HA 3105, a blend (91%/9%) of high crystallinity polypropylene produced by LyondellBasell, and Oppera PR 100N, a hydrocarbon resin produced by ExxonMobil Chemical.

Sample B is therefore representative of the prior art described by the aforementioned prior art document US 2003/01481119 A1.

### Preparation of Sample C

A BOPP film having the structure and thickness equal to those of sample A was initially produced. Then both sides of the film were subjected to corona treatment, so as to reach a critical surface energy > 38 mN/m. Subsequently, on both sides of the film a layer of primer was first applied and then a layer of lacquer to obtain a layered article of the type illustrated in figure 2.

Michem Flex P 2300 (Michelman) was used as primer in an amount equal to 0.05 g/m² dry, while the lacquer having the formulation reported in Table II below was applied in an amount equal to 1.3 g/m² dry.

**Table II**

| **Product** | **Type** | **Manufacturer** | **Phr*** |
|---|---|---|---|
| Joncryl HSL 700 | Acrylic resin | BASF | 100 |
| Bindzil 40/170 | Colloidal silica | AkzoNobel | 25 |
| Michem Lube 160PFP | Carnauba wax | Michelman | 7.2 |
| Syloid 244FP | Synthetic silica | Grace | 0.1 |
| L-Arginine | Amino acid | Kyowa Hakko | 40 |

| | | | |
|---|---|---|---|
| *: dry parts per 100 parts of resin | | | |

The samples A, B and C were subjected to tests to determine the rate of transmission through them of constitutive substances of mineral oils and to measure therefore their permeation rates.

The tests and related measurements were implemented by the Fraunhofer Institute for Process Engineering and Packaging (IVV).

Each sample is placed in a permeation cell at the predetermined temperature. A cardboard disk contaminated with mineral oil is positioned in the lower part of the cell (about 750 µg/g (ppm) of each substance). The sample is in direct contact with the cardboard. Nitrogen is made to flow on the other side of the cell. The nitrogen flow removes the substances permeated through the sample. The nitrogen is then analyzed using the gas chromatography technique with a flame ionization detector (GC/FID). Calibration is achieved by injecting known quantities of the substances to be measured.

Sample C was measured for 40 days at 40 °C two times a day.

5 Samples A and B were measured for fourteen days at 40 °C eight times per day.

Table III shows the list of the permeating substances that were tested.

Alkanes (C#) represent the aliphatic portion of a mineral oil (MOSH). Substances were 10 also used that represent the aromatic hydrocarbons present in a mineral oil (MOAH: naphthalene, 1-methylnaphthalene, 1- ethylnaphthalene, fenanthrene). Benzophenone and 4-methylbenzophenone are substances used as photo-initiators in inks, and are therefore likely to be present as contaminants in recycled and/or printed cardboard. 2,7 diisopropylnaphthalene and isopropyl laurate are two substances widely present in recycled 15 and printed cardboard.

**Table III**

| | | | **Molecular weight** | **Melting temperature** | **Boiling point** | **Density** |
|---|---|---|---|---|---|---|
| **Substance** | **CAS** | **Formula** | **g/mol** | **°C** | **°C** | **g/ml** |
| C 12 | 112-40-3 | C₁₂H₂₆ | 170.33 | -10 | 216 | 0.7487 |
| Naphthalene | 91-20-3 | C₁₀H₈ | 128.17 | 80 | 218 | 1.1400 |
| 1-Methylnaphthalene | 90-12-0 | C₁₁H₁₀ | 142.20 | -31 | 245 | 1.0200 |
| C 14 | 629-59-4 | C₁₄H₃₀ | 198.39 | 6 | 254 | 0.7628 |
| 1-Ethylnaphthalene | 1127-76-0 | C₁₂H₁₂ | 156.22 | -15 | 260 | 1.0080 |
| 2,7-Diisopropylnaphthalene | 38640-62-9 | C₁₆H₂₀ | 212.33 | | 317 | 0.9500 |
| C 16 | 544-76-3 | C₁₆H₃₄ | 226.44 | 18 | 287 | 0.7733 |
| Isopropyl laurate | 10233-13-3 | C₁₅H₃₀O₂ | 242.40 | | 281 | 0.8650 |
| Benzophenone | 119-61-9 | C₁₃H₁₀O | 182.22 | 48 | 305 | 1.1100 |
| C 18 | 593-45-3 | C₁₈H₃₈ | 254.49 | 28 | 316 | 0.7768 |
| 4-Methylbenzophenone | 134-84-9 | C₁₄H₁₂O | 196.25 | 55 | 326 | 1.0800 |
| Phenanthrene | 85-01-8 | C₁₄H₁₀ | 178.23 | 99 | 332 | 1.1800 |
| C 20 | 112-95-8 | C₂₀H₄₂ | 282.55 | 37 | 343 | 0.7886 |
| C 22 | 629-97-0 | C₂₂H₄₆ | 310.60 | 44 | 369 | 0.7944 |
| C 24 | 646-31-1 | C₂₄H₅₀ | 338.65 | 54 | 391 | 0.7665 |

Table IV below shows the maximum permeation rate of the various substances (expressed in [µg/24h*dm²) that were measured for three different samples A, B and C.

**Table IV**

| | | | **A** | **B** | **C** |
|---|---|---|---|---|---|
| **Substance** | **CAS** | **Formula** | **µg/24h dm²** | **µg/24h dm²** | **µg/24h dm²** |
| C 12 | 112-40-3 | C₁₂H₂₆ | 3780 | 2843 | 4.4 |
| Naphthalene | 91-20-3 | C₁₀H₈ | 2900 | 1926 | 1.5 |
| 1-Methylnaphthalene | 90-12-0 | C₁₁H₁₀ | 1342 | 1064 | 3.4 |
| C 14 | 629-59-4 | C₁₄H₃₀ | 687 | 632 | 3.8 |
| 1-Ethylnaphthalene | 1127-76-0 | C₁₂H₁₂ | 693 | 597 | 3.4 |
| 2,7-Diisopropylnaphthalene | 38640-62-9 | C₁₆H₂₀ | 53.9 | 49.4 | 1.0 |
| C 16 | 544-76-3 | C₁₆H₃₄ | 111 | 107 | 3.0 |
| Isopropyl laurate | 10233-13-3 | C₁₅H₃₀O₂ | 98.7 | 97.7 | 2.1 |
| Benzophenone | 119-61-9 | C₁₃H₁₀O | 59.5 | 44.7 | 0.4 |
| C 18 | 593-45-3 | C₁₈H₃₈ | 17.6 | 16.7 | 2.0 |
| 4-Methylbenzophenone | 134-84-9 | C₁₄H₁₂O | 27.5 | 19.3 | 0.7 |
| Phenanthrene | 85-01-8 | C₁₄H₁₀ | 28.9 | 23.8 | 1.8 |
| C 20 | 112-95-8 | C₂₀H₄₂ | 3.8 | 4.1 | 0.5 |
| C 22 | 629-97-0 | C₂₂H₄₆ | 1.5 | 1.5 | 0.07 |
| C 24 | 646-31-1 | C₂₄H₅₀ | 0.3 | 0.2 | 0.008 |

Table V reworks the data of the previous Table IV expressing such data in terms of factors of improvement of the barrier properties against the components of the mineral oils of samples B and C compared to sample A, which is taken as the reference. In other words, the data of the columns B and C express the relationship between the maximum rate of permeation of a substance through samples A and B (and C respectively).

**Table V**

| | | | **A** | **B** | **C** |
|---|---|---|---|---|---|
| **Substance** | **CAS** | **Formula** | | | |
| C 12 | 112-40-3 | C₁₂H₂₆ | 1 | **1.33** | **859.1** |
| Naphthalene | 91-20-3 | C₁₀H₈ | 1 | **1.51** | **1933.3** |
| 1-Methylnaphthalene | 90-12-0 | C₁₁H₁₀ | 1 | **1.26** | **394.7** |
| C 14 | 629-59-4 | C₁₄H₃₀ | 1 | **1.09** | **180.8** |
| 1-Ethylnaphthalene | 1127-76-0 | C₁₂H₁₂ | 1 | **1.16** | **203.8** |
| 2,7-Diisopropylnaphthalene | 38640-62-9 | C₁₆H₂₀ | 1 | **1.09** | **53.9** |
| C 16 | 544-76-3 | C₁₆H₃₄ | 1 | **1.04** | **37.0** |
| Isopropyl laurate | 10233-13-3 | C₁₅H₃₀O₂ | 1 | **1.01** | **47.0** |
| Benzophenone | 119-61-9 | C₁₃H₁₀O | 1 | **1.33** | **148.8** |
| C 18 | 593-45-3 | C₁₈H₃₈ | 1 | **1.05** | **8.8** |
| 4-Methylbenzophenone | 134-84-9 | C₁₄H₁₂O | 1 | **1.42** | **39.3** |
| Phenanthrene | 85-01-8 | C₁₄H₁₀ | 1 | **1.21** | **16.1** |
| C 20 | 112-95-8 | C₂₀H₄₂ | 1 | 0.93 | **7.6** |
| C 22 | 629-97-0 | C₂₂H₄₆ | 1 | 1.00 | **21.4** |
| C 24 | 646-31-1 | C₂₄H₅₀ | 1 | **1.50** | **37.5** |

Figures 3 and 4 represent graphically, for the three samples in question, the maximum rate of permeation of various substances present in the mineral oils. It is immediately evident how sample C is by far the one with the best barrier properties with respect to all these substances.

Naturally, without altering the principle of the invention, the details of implementation and embodiments may vary widely with respect to those described purely by way of example, without thereby departing from its scope.

## Claims

1. A layered article comprising a BOPP film including at least one sub-layer of homopolymer PP, at least one outer layer of lacquer having barrier properties against mineral oils and one intermediate primer layer interposed between said at least one outer layer of lacquer and said film.

2. Article according to claim 1, constituted by said film, having one outer layer of lacquer and one intermediate primer layer interposed between said lacquer layer and said film.

3. Article according to claim 1, constituted by said film, having two outer layers of lacquer and one intermediate primer layer interposed between each lacquer layer and said film.

4. Article according to any one of the preceding claims, wherein said film is constituted by one or more internal sub-layers of homopolymer PP and one or more outer sub-layers composed of homopolymer PP, copolymers C₃-C₄, C₃-C₂-C₄ and/or blends thereof.

5. Article according to any one of the preceding claims, wherein said intermediate layer is formed by an aqueous dispersion of polyethyleneimine or aliphatic polyurethane.

6. Article according to any one of the preceding claims, wherein said lacquer is formed by an aqueous dispersion of a polymeric binder, at least one amino acid, carnauba wax and silica.

7. Article according to claim 6, wherein said polymeric binder is composed of esters of acrylic acid, meta-acrylic acid and/or styrene.

8. Article according to claim 6 or 7, wherein said amino acid is selected from the group consisting of arginine, lysine, glycine, citrulline, and blends thereof.

9. Article according to any one of the preceding claims 6 to 8, wherein for 100 parts by weight of polymeric binder there are from 5 to 80 parts by weight of amino acid.

10. Article according to any one of the preceding claims 6 to 9, wherein for 100 parts by weight of polymeric binder there are from 3 to 10 parts by weight of carnauba wax and from 0.5 to 40.5 parts by weight of silica.

11. Article according to any one of the preceding claims, wherein said film has a thickness between 16 and 60 µm.

12. Article according to any one of the preceding claims, wherein said lacquer has a dry mass per unit of surface area between 0.30 and 6 g/m².

13. Article according to any one of the preceding claims, having, compared to the BOPP film per se, a factor of improvement of the barrier properties against dodecane > 500 and a factor of improvement of the barrier properties against naphthalene > 1500.

14. Use of a layered article according to any one of the preceding claims for packaging a food product and hindering the migration of mineral oils into said food product.
